# EUROPÄISCHE PATENTSCHRIFT

(11) **EP 4 549 759 B1**
(45) Veröffentlichungstag und Bekanntmachung des Hinweises auf die Patenterteilung: **22.04.2026**
(21) Anmeldenummer: 23207161.3
(22) Anmeldetag: 31.10.2023
(51) Int. Cl.: F16B 39/26, F16B 43/00, H01R 4/30

(54) **SICHERUNGSSCHEIBE**
LOCKING WASHER
RONDELLE DE BLOCAGE

(43) Veröffentlichungstag der Anmeldung: 07.05.2025
(73) Patentinhaber: TV Innovation GmbH & Co. KG, 58553 Halver (DE)
(72) Erfinder: Volborth, Thomas, 58553 Halver (DE)
(74) Vertreter: Patentanwälte Dörner & Kötter PartG mbB

(56) Entgegenhaltungen:
- DE-U1- 202020 101 633
- US-A- 1 896 650
- US-A1- 2011 091 302

## Beschreibung

Die Erfindung betrifft eine Sicherungsscheibe zur Anordnung auf eine ebene Unterlage nach dem Oberbegriff des Patentanspruchs 1.

Derartige Sicherungsscheiben haben die Aufgabe, Lockerungsvorgängen bei Schraubverbindungen entgegenzuwirken. Derartige Lockerungsvorgänge resultieren aus Vorspannkraftverlusten in den Schraubverbindungen, welche als Folge von Setz- und/oder Kriechvorgängen bei den miteinander verschraubten Teilen auftreten.

Um Lockerungsvorgänge zu vermeiden, müssen die Sicherungsscheiben über einen bestimmten Federweg eine ausreichende Federkraft aufweisen, die einen durch die Setz- und/oder Kriechvorgänge hervorgerufenen Vorspannkraftverlust soweit ausgleichen kann, dass die für die Betriebssicherheit der Schraubenverbindung erforderliche Klemmkraft erhalten bleibt.

Zur Erzielung einer ausreichenden Federkraft über einen bestimmten Federweg sind bereits verschiedenste Scheibenkonstruktionen vorgeschlagen worden; die einfachste Scheibenkonstruktion dieser Art stellt die Spannscheibe nach DIN 6796:2009-08 dar. Bei dieser bekannten Konstruktion geht die Fläche des äußeren Ringabschnitts bei gleicher Stärke des Scheibenkörpers unmittelbar ohne erkennbare Unterteilung in die Fläche des inneren Ringabschnitts über.

Eine weitere Konstruktion der gattungsgemäßen Art offenbart beispielweise die DE-B 2061297. Bei dieser Konstruktion ist die Scheibenunterseite durch eine Stufe in die Fläche des äußeren Ringabschnitts und die Fläche des inneren Ringabschnitts unterteilt. Beim Anziehen der Schraubverbindung wird deshalb zuerst die Fläche des äußeren Ringabschnitts auf die Unterlage gepresst, woraus eine Anfangsfederkraft mit bestimmtem Federweg resultiert. Beim weiteren Anziehen folgt dann die Krafteinleitung über die relativ steife Stufe, wodurch sich eine relativ hohe Federkraft bei sehr geringem Federweg ergibt. Auf Grund der Hebelwirkung der Stufe besteht jedoch die Gefahr, dass sich bei einem weiteren Anziehvorgang die Außenkante der Fläche des äußeren Ringabschnitts von der Unterlage abhebt, sodass schließlich die gesamte Belastung lediglich im Stufenbereich liegt. Dieser Bereich ist deshalb auch am meisten belastet. Scheibenkonstruktionen dieser Art eignen sich deshalb lediglich für solche Sicherungsaufgaben, die im Bereich der Auflage unter der Stufe relativ hohen Spezifischen Flächenpressungen ausgesetzt werden dürfen.

Eine weitere Scheibenkonstruktion offenbart die DE-A 40 25 146. Bei dieser bekannten Konstruktion geht die Fläche des äußeren Ringabschnitts stetig, d.h. ohne Stufe oder dergleichen in die Fläche des inneren Ringabschnitts über. Der Übergangsbereich hat bei dieser Scheibenkonstruktion jedoch einen geringeren Querschnitt als der übrige Bereich des Scheibenkörpers. Dieser geringere Querschnitt im Übergangsbereich wird durch eine auf der Scheibenoberseite angeordnete umlaufende Rinne erzielt. Auf Grund dieser umlaufenden Rinne auf der Scheibenoberseite haben die Scheibenkonstruktionen dieser Art insbesondere bei geringer Stärke des Scheibenkörpers und zu hoher Anzugskraft die Tendenz zu "klaffen", d.h. die Neigung im Bereich der Außenkante oder der Fläche des äußeren Ringabschnitts abzuhalten. Dieses "Klaffen" kann bei derartigen Scheibenkonstruktionen in seinen Auswirkungen dadurch reduziert werden, dass der die Fläche des äußeren Ringabschnitts aufweisende Teil des Scheibenkörpers relativ großflächig ausgebildet wird. Dies bedeutet, dass Scheibenkonstruktionen dieser Art ihre volle Sicherungswirkung insbesondere bei großem Außendurchmesser erzeugen.

In der EP2287477 A1 ist eine Sicherungsscheibe mit kegelstumpfartiger Form beschrieben, an deren der Unterlage zugewandten Unterseite ein äußerer und ein innerer Ringabschnitt winklig zueinander angeordnet sind, wobei beide Ringabschnitte mit der Unterlage einen spitzen Winkel einschließen. Diese als Sperrkantscheibe bezeichnete Sicherungsscheibe hat sich in der Praxis bewährt, da sie unter geringem Materialeinsatz einfach herstellbar ist und dabei gute Federungs- und Sicherungseigenschaften aufweist. Sie zeichnet sich insbesondere auch dadurch aus, dass aufgrund des Winkels zwischen den beiden Ringabschnitten zu insgesamt drei Auflagepunkten - unter dem Schraubenkopf, innen zwischen den Ringabschnitten und außen am umlaufenden Rand - bezogen auf einen vergleichsweise geringen Restfederweg eine hohe Restfederkraft gegenüber bekannten Spannscheiben besteht. Bei der Sperrkanntscheibe ist eine flächige Auflage nicht möglich, da dies zu einer Überdehnung des Materials bis zum Bruch der Scheibe im Übergangsbereich zwischen den Beiden Ringabschnitten führen würde. Eine noch weitere Konstruktion der gattungsgemäßen Art offenbart die US1896650 A.

Bauteile aus Buntmetall, wie zum Beispiel Aluminiumguss, haben einerseits eine im Vergleich zu Stahl fast ebenso hohe Festigkeit. Aus diesem Grund werden ähnliche Vorspannkräfte wie beim Verspannen von Stahlbauteilen angewendet. Zum Verspannen der Bauteile aus Buntmetall werden daher aufgrund der Vorspannkräfte und geringerer Kosten häufig Stahlschraubenverbindungen eingesetzt. Die Grenzfließspannung der Buntmetall-Materialien, wie beispielsweise Aluminiumguss, ist jedoch wesentlich geringer als bei Stahlwerkstoffen, sodass es hier darauf ankommt, eine möglichst gleichmäßige Auflagefläche und somit eine möglichst gleichmäßige Flächenpressung zu erreichen. Hierzu wird häufig zusätzlich eine plane Scheibe zwischen Sicherungsscheibe und Unterlage eingesetzt, wodurch Spannungsspitzen ausgeglichen werden.

Hier setzt die vorliegende Erfindung an. Aufgabe der vorliegenden Erfindung ist es, eine Sicherungsscheibe der vorgenannten Art zu schaffen, die bei zumindest gleichen Sicherungseigenschaften eine flächige Auflage auf der Gegenlage ermöglicht. Gemäß der Erfindung wird diese Aufgabe durch eine Sicherungsscheibe mit den Merkmalen des kennzeichnenden Teils des Patentanspruchs 1 gelöst.

Mit der Erfindung ist eine Sicherungsscheibe geschaffen, die bei zumindest gleichen Sicherungseigenschaften eine flächige Auflage auf der Unterlage ermöglicht. Dadurch, dass die Scheibe einen Querschnitt aufweist, der durch wenigstens zwei ineinander übergehende Kreisbögen mit unterschiedlichen Radien ist, ist es bei einem gewünschten Restfederweg möglich, dass die Sicherungsscheibe bei Erreichen der Vorspannkraft vollflächig auf der Unterlage aufliegt. Überraschend hat sich gezeigt, dass durch den erfindungsgemäßen Querschnitt mit wenigstens zwei ineinander übergehenden Kreisbögen mit unterschiedlichen Radien wesentlich vergrößerte Restfederkräfte einstellbar sind. Vorteilhaft ist die Sicherungsscheibe aus Federstahl ausgebildet.

Durch die Variierung der Position der Radienmittelpunkte und Radienanteile ist die Höhe der Sicherungsscheibe sowie auch der Restfederkraftverlauf einstellbar. Die Federwirkung und der Restfederkraftverlauf entsteht bei der erfindungsgemäßen Sicherungsscheibe nicht nur aufgrund der Druck- und Zugspannungen auf der Ober- bzw. Unterseite der Scheibe sowie der Ringspannung des Außendurchmessers, sondern auch durch die kreisbogenartigen Formen des Scheibenquerschnitts.

In Weiterbildung der Erfindung ist der Radius des an der Innenkante mündenden Kreisbogens kleiner, als der Radius des an der Außenkante mündenden Kreisbogens. Hierdurch ist eine frühe flächige Anlage des Außenbereichs der Sicherungsscheibe an der Unterlage erzielt.

In Ausgestaltung der Erfindung ist die Materialstärke der Sicherungsscheibe im Bereich der Innenkante größer ist, als im Bereich der Außenkante. Hierdurch ist die Restfederkraft weiter erhöht.

In weiterer Ausgestaltung der Erfindung ist die der Unterlage zugewandte Scheibenunterseite mit einer Verzahnung versehen. Hierdurch ist die Sicherungsscheibe auf der Unterlage verdrehsicher gehalten.

In Weiterbildung der Erfindung ist die der Scheibenunterseite gegenüberliegende Scheibenoberseite mit einer Kodierung versehen. Hierdurch ist eine verbesserte Sicherungswirkung erzielbar. Diese Kodierung kann sich auf einen Innenringbereich beschränken und beispielsweise in Form einer Rändelung ausgestaltet sein.

In Ausgestaltung der Erfindung ist die Außenkante scharfkantig ausgebildet. Hierdurch ist ein Eingraben der Außenringfläche in die Unterlage unterstützt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Sicherungsscheibe;
- Figur 2: die schematische Darstellung der Sicherungsscheibe aus Figur 1 vor dem Anziehen der Schraube;
- Figur 3: eine Detaildarstellung der zwischen Schraubenkopf und Unterlage befindlichen Sicherungsscheibe aus Figur 1 im Querschnitt;

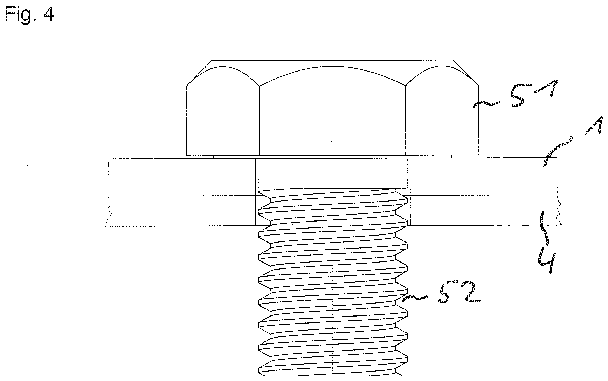

- Figur 4: die Darstellung der Verbindungsanordnung aus Figur 3 mit angezogener Schraube

Die als Ausführungsbeispiel gewählte Sicherungsscheibe ist aus C60-Federstahl hergestellt und umfasst einen im Wesentlichen ringförmig ausgebildeten Scheibenkörper 1, mit einer Scheibenoberseite 11 und einer Scheibenunterseite 12. Die Scheibenoberseite 11 ist mit einer - nicht dargestellten - Kordierung versehen, die im Ausführungsbeispiel in Form einer Riffelung ausgeführt ist. Der Scheibenkörper 1 ist gewölbt ausgebildet. Dabei ist seine Querschnittskontur aus zwei ineinander übergehenden kreisbogenförmigen Abschnitten 13, 14 gebildet, wobei der Radius r1 des ersten, inneren kreisbogenförmigen Abschnitts 13 kleiner ist, als der Radius r2 des zweiten, äußeren kreisbogenförmigen Abschnitts 14.

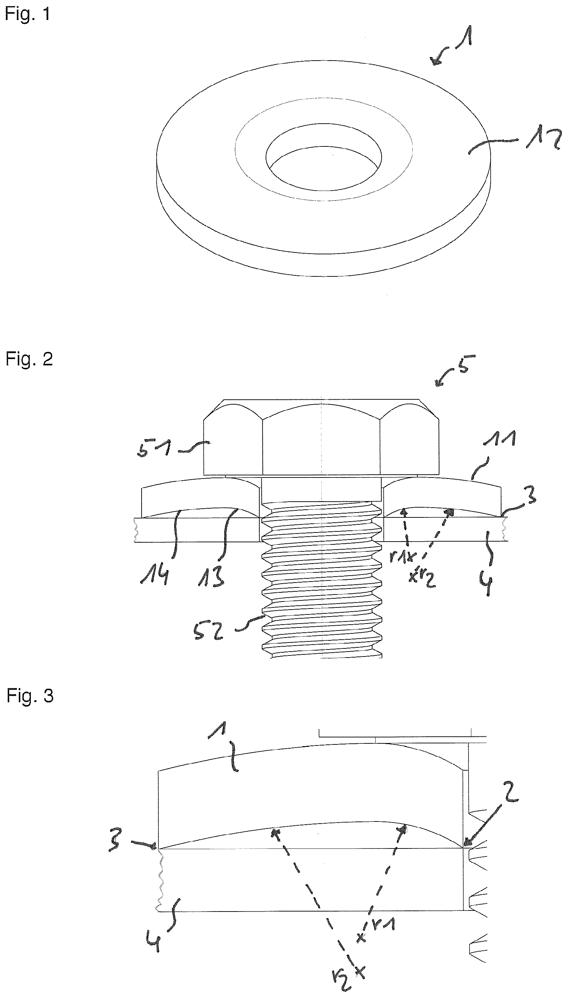

In Figur 2 ist die Anordnung einer erfindungsgemäßen Sicherungsscheibe schematisch skizziert. Hierbei ist eine Schraube 5 durch den Scheibenkörper 1 der Sicherungsscheibe sowie eine Bohrung 41 einer Unterlage 4 geführt. In Figur 2 ist die Schraube 5 nicht angezogen, d.h., die Sicherungsscheibe befindet sich im unverspannten Zustand. Hierbei liegt sie mit der Innenkante 2 des gewölbten inneren Abschnitts und der Außenkante 3 des Scheibenkörpers 1 auf der Unterlage 4 auf. Die Außenkante 3 ist scharfkantig ausgebildet. Hierdurch gräbt sich die Sicherungsscheibe in verspanntem Zustand stärker in die Unterlage 4 ein.

Beim Anziehen der Schraube 5 wird der Scheibenkörper 1 gegen die Gegenlage 4 gepresst, wobei die beiden kreisbogenförmigen Abschnitte 13, 14 des Scheibenkörpers 1 zunehmend abgeflacht werden. Durch die unterschiedlichen Radien r1, r2 der beiden kreisbogenförmigen Abschnitte 13, 14 erfolgt eine Verschiebung der Fläche der Scheibenunterseite 12 nach außen, bis der Scheibenkörper 1 flächig auf der Unterlage 4 aufliegt, wodurch eine Federrestspannung bewirkt ist. Durch die Wahl der Radien r1, r1 der beiden Abschnitte 13, 14 ist die Federrestspannung der Sicherungsscheibe einstellbar.

## Patentansprüche

1. Sicherungsscheibe zur Anordnung auf einer ebenen Unterlage (4), mit einem ringförmigen Scheibenkörper (1), der einen von der Innenkante zur Außenkante konvexen Verlauf aufweist, **dadurch gekennzeichnet, dass** die Scheibe einen Querschnitt aufweist, der durch wenigstens zwei ineinander übergehende Kreisbögen (13, 14) mit unterschiedlichem Radius (r1, r2) gebildet ist.

2. Sicherungsscheibe nach Anspruch 1, **dadurch gekennzeichnet, dass** der Radius (r1) des an der Innenkante (2) mündenden Kreisbogens (13) kleiner ist, als der Radius (r2) des an der Außenkante (3) mündenden Kreisbogens (14).

3. Sicherungsscheibe nach Anspruch 1 oder 2, **dadurch gekennzeichnet, dass** deren Materialstärke im Bereich der Innenkante (2) größer ist, als im Bereich der Außenkante (3).

4. Sicherungsscheibe nach einem der vorgenannten Ansprüche, **dadurch gekennzeichnet, dass** die der Unterlage (4) zugewandte Scheibenunterseite (12) mit einer Verzahnung versehen ist.

5. Sicherungsscheibe nach einem der vorgenannten Ansprüche, **dadurch gekennzeichnet, dass** die der Scheibenunterseite (12) gegenüberliegende Scheibenoberseite (11) mit einer Kodierung versehen ist.

6. Sicherungsscheibe nach einem der vorgenannten Ansprüche, **dadurch gekennzeichnet, dass** die Außenkante (3) scharfkantig ausgebildet ist.

7. Sicherungsscheibe nach einem der vorgenannten Ansprüche, **dadurch gekennzeichnet, dass** diese aus Federstahl ausgebildet ist.

## Claims

1. Locking washer for arrangement on a level base (4) comprising an annular washer body (1) that has a convex progression from the inner edge towards the outer edge, **characterised in that** the washer has a cross-section that is formed by at least two circular arcs (13, 14) with different radii (r1, r2) that transition into each other.

2. Locking washer according to claim 1, **characterised in that** the radius (r1) of the circular arc (13) ending at the inner edge (2) is smaller than the radius (r2) of the circular arc (14) ending at the outer edge (3).

3. Locking washer according to one of claims 1 or 2, **characterised in that** its material thickness in the area of the inner edge (2) is larger than that in the area of the outer edge (3).

4. Locking washer in accordance with one of the preceding claims, **characterised in that** the washer bottom (12) facing the base (4) is provided with a serration.

5. Locking washer in accordance with one of the preceding claims, **characterised in that** the washer top (11) that is opposite the washer bottom (12) is provided with a code.

6. Locking washer in accordance with one of the preceding claims, **characterised in that** the outer edge (3) is formed with a sharp edge.

7. Locking washer in accordance with one of the preceding claims, **characterised in that** it is formed of spring steel.

## Revendications

1. Rondelle de blocage à disposer sur une surface support (4) plane, comprenant un corps (1) de rondelle de forme annulaire au tracé convexe observé du bord intérieur vers le bord extérieur, **caractérisée en ce que** la rondelle présente une section formée par au moins deux arcs (13, 14) de cercle allant en se confondant et chacun d'un rayon différent (r1, r2).

2. Rondelle de blocage selon la revendication 1, **caractérisée en ce que** le rayon (r1) de l'arc (13) de cercle aboutissant au bord intérieur (2) est plus petit que le rayon (r2) de l'arc (14) de cercle aboutissant au bord extérieur (3).

3. Rondelle de blocage selon la revendication 1 ou 2, **caractérisée en ce que** l'épaisseur de leur matériau dans la zone du bord intérieur (2) est plus forte que dans la zone du bord extérieur (3).

4. Rondelle de blocage selon l'une des revendications précédentes, **caractérisée en ce que** le côté inférieur (12) de la rondelle tourné vers la surface support (4) est muni d'une denture.

5. Rondelle de blocage selon l'une des revendications précédentes, **caractérisée en ce que** le côté supérieur (11) de la rondelle situé en face du côté inférieur (12) de la rondelle est muni d'un codage.

6. Rondelle de blocage selon l'une des revendications précédentes, **caractérisée en ce que** le bord extérieur (3) est configuré avec une arête vive.

7. Rondelle de blocage selon l'une des revendications précédentes, **caractérisée en ce que** celle-ci est configurée en acier à ressort.
